# EUROPÄISCHE PATENTSCHRIFT

(11) **EP 0 895 300 B1**
(45) Veröffentlichungstag und Bekanntmachung des Hinweises auf die Patenterteilung: **23.11.2005**
(21) Anmeldenummer: 98114012.2
(22) Anmeldetag: 27.07.1998
(51) Int. Cl.: H01Q 1/24, H01Q 9/16, G01R 31/28, H01Q 13/10, H01Q 21/30, H04B 1/38, H01Q 9/28

(54) **Antennenkoppler zum Testen von Mobiltelefonen**
Antenna coupler for testing of mobile telephones
Coupleur d'antenne pour tester des téléphones mobiles

(30) Priorität: 29.07.1997 DE 19732639
(43) Veröffentlichungstag der Anmeldung: 03.02.1999
(73) Patentinhaber: Willtek Communications GmbH, 85737 Ismaning (DE)
(72) Erfinder: Hofmann, Andreas Dipl.-Ing., 82041 Oberhaching (DE)
(74) Vertreter: Verscht, Thomas Kurt Albert

(56) Entgegenhaltungen:
- WO-A-97/24624
- GB-A- 2 266 997
- US-A- 4 740 794
- US-A- 5 493 702

## Beschreibung

Die Erfindung betrifft einen Antennenkoppler zum Testen von Mobiltelefonen. Ein Antennenkoppler ist ein Bestandteil eines Testaufbaus zur Wartung und Entwicklung von Mobiltelefonen.

Beim Testen von Mobiltelefonen bzw. Handies werden eine Vielzahl von Eigenschaften bzw. Parametern untersucht, die sich grob in Sender- und Empfängermessungen einteilen lassen. Bei Sendermessungen wird beispielsweise u. a. eine Messung des Phasenfehlers, des Frequenzfehlers, der Leistung und des Spektrums durchgeführt. Bei Empfängermessungen werden Bitfehlerraten gemessen. Hinsichtlich des technischen Hintergrunds der Tests von Funktelefonen wird auf die Kapitel II und III des Buchs "GSM-Technik und Meßpraxis" von Siegmund Redl und Mathias Weber, Franzis-Verlag, 2. Auflage, Poing, 1995, aus der Reihe Funkschau Technik verwiesen.

Um ein dem praktischen Einsatz des Mobiltelefons möglichst nahekommendes Messen zu ermöglichen, sollte das zu testende Mobiltelefon (im folgenden auch Prüfling oder DUT= device under test genannt) über seine Antenne HF-Leistung senden und empfangen. Sind die Übertragungseigenschaften zum Prüfling bekannt und hinreichend konstant, kann die vom Prüfling empfangene bzw. gesendete Leistung aus den gemessenen Werten berechnet werden. Bei dem an sich bekannten Meßverfahren mit einer Antenne am Meßgerät zur Kopplung mit der Antenne des Prüflings werden die Meßergebnisse im wesentlichen durch folgende Parameter beeinflußt:
(i) Abstand und beider Antennen; (ii) Umgebung der Antennen (Meßgeräte, Laboreinrichtung, Wände, Menschen), und zwar aufgrund von Reflexionen; (iii) Störung durch einstrahlende Störsender; und (iv) HF-Eigenschaften der Antenne (Strahlcharakteristik über Raumwinkel und Frequenz).

Daraus folgt, daß Messungen nur in großen abgeschirmten Kammern, die mit HF-absorbierenden Materialien ausgekleidet sind, möglich sind. Ferner muß sich die gesamte Meßapparatur außerhalb der Kammer befinden. Zur manuellen Bedienung des Prüflings muß eine Person den Raum betreten und wieder verlassen bevor weitergemessen werden kann.

Ferner sind im Stand der Technik als Koffer ausgebildete Miniaturmeßkammern bekannt. Bei diesen ist grundsätzlich nachteilig, daß zur Bedienung des Prüflings der Koffer geöffnet und wieder geschlossen werden muß. Außerdem ein derartiger Koffer unhandlich und in der Herstellung aufwendig und teuer. Die Übertragung der HF wird gemäß dem Stand der Technik im Inneren des Koffers durch einen Koppelmechanismus, der über die Antenne des Prüflings geschoben wird (Modell CDT Z10 von Rohde und Schwarz), oder durch eine Dipolantenne mit einer grobe x- und y- Positionierung des Prüflings (Modell AH 5911 von ANDO) durch Auflegen des Prüflings auf ein Koordinatensystem realisiert. Bei der ersten bekannten Übertragungsart ist nachteilig, daß diese für Prüflinge mit im Gehäuse integrierter Antenne bzw. mit einer für den Koppelmechanismus zu großen Antenne nicht geeignet ist. Bei der zweiten Art ist die Positionierung des Prüflings ungenau, da dieser nicht gut fixiert werden kann. Schließlich ist bei beiden bekannten Arten der HF-Übertragung der Frequenzbereich des Kopplers durch den Aufbau in einem unerwünscht hohen Maß begrenzt und die Koppeldämpfung für manche Prüflinge so hoch, daß die Dynamik des Meßgeräts nicht ausreicht.

Zum Stand der Technik wird ferner auf die britische Patentveröffentlichung GB 2 266 997 A hingewiesen, aus welcher eine Radiofrequenzantenne bekannt ist, die damit verbunden, z. B. mittels eines Koaxialkabels, einen Verbinder besitzt, welcher Mittel besitzt, um diesen mit, in oder angrenzend an das Gehäuse eines tragbaren Telefons oder eines anderen Radiofrequenzsenders und/oder -empfängers zu befestigen. Der Verbinder besitzt inkorporiert eine elektrische Spule, Kondensatorplatten oder weitere Mittel, die geeignet sind, ohne direkten elektrischen Kontakt zu koppeln, z. B. induktiv oder kapazitiv, und zwar an eine Antenne, die in der Funkeinrichtung befestigt ist oder mit dieser integral ausgebildet ist. Die Antenne kann außen an einem Auto, z. B. auf dem Dach, befestigt werden.

Aus der US-Patentveröffentlichung US-A-5,493,702 ist eine Anordnung zum Gestatten des sicheren, abgeschirmten Gebrauchs eines handgehaltenen Mobiltelefons in einer Struktur, wie z. B. einem Gebäude oder einem Fahrzeug oder einem Flugzeug, bekannt, und zwar unter Verwendung einer Docking-Station, die das Mobiltelefon und seine kurze, externe Antenne aufnimmt. Aus der US-Patentveröffentlichung US-A-4,740,794 ist ein verbinderloser Antennenkoppler bekannt, welcher eine Metallabschirmung aufweist, die derart dimensioniert ist, um einen Teil einer portablen Funkeinrichtung mit einer internen Antenne und eine Transmissionsleitung zu umschließen.

Der vorliegenden Erfindung liegt daher die Aufgabe zugrunde, die Nachteile des Standes der Technik zu vermeiden, und insbesondere einen einfach aufgebauten Antennenkoppler zu schaffen, der für die Vielzahl der kommerziell erhältlichen Funktelefone eine geringe Koppeldämpfung besitzt.

Die erfindungsgemäße Aufgabe wird bei einem Antennenkoppler der eingangs genannten Art durch die im kennzeichnenden Teil des Anspruchs 1 angegebenen Merkmale gelöst.

Gemäß einer vorteilhaften Ausführungsform der Erfindung weist die Leiterplatte ein erstes und ein zweites Antennenelement auf, wobei das erste Antennenelement für einen ersten Frequenzbereich und das zweite Antennenelement für einen zweiten Frequenzbereich vorgesehen ist. Der erste Frequenzbereich ist 1710 - 1990 MHz (DCS 1800 und DCS 1900 System) und der zweite Frequenzbereich ist 880 - 960 MHz (GSM). Dadurch können mit einem Antennenkoppler Handys des D1-, D2-, E- und US-Netz, sowie weiterer in diesem Frequenzbereich operierende Funknetze, getestet werden.

Vorteilhafterweise besteht die Oberseite der Leiterplatte, insbesondere deren Außenbereich, im wesentlichen aus leitendem Material, das sich auf Massenpotential befindet. Dies sorgt für eine gewisse Abschirmung von externen Feldern, ohne einen platzaufwendigen Koffer erforderlich zu machen. Ferner wird dadurch auch der Zugang zu dem Handy während der Tests sichergestellt.

Vorzugsweise ist das erste Antennenelement ein Dipolantenne und das zweite Antennenelement eine Schlitzantenne. In einer bevorzugten Anordnung ist das erste Antennenelement parallel zu und im wesentlichen unter der Antenne des Mobiltelefons auf der Oberseite der Leiterplatte angeordnet und das zweite Antennenelement orthogonal zu der Antenne des Mobiltelefons und im wesentlichen mittig unter dem Rumpf des Mobiltelfons angeordnet. Durch eine Vielzahl von experimentellen Tests an herkömmlichen Handies wurde herausgefunden, daß die Art der Antennen und diese Anordnung zum Testen in zwei Frequenzbereichen eine besonders günstige Koppeldämpfung ermöglicht.

Vorzugsweise sind die beiden Antennenelemente über eine Frequenzweiche an einen Anschluß zu einer Testvorrichtung kombiniert, wodurch sich der Antennenkoppler über einen einzigen Anschluß an eine Testvorrichtung für mehrere Frequenzbereiche anschließen läßt.

Gemäß einer bevorzugten Ausführungsform der Erfindung ist die Frequenzweiche auf der Unterseite der Leiterplatte, wie auch die Antennenelemente in Streifenleitertechnik ausgebildet, wodurch sich ein sehr kostengünstiger und kompakter Aufbau realisieren läßt.

In einer weiteren vorteilhaften Ausführungsform der Erfindung ist die Unterseite der Leiterplatte von einem Abschirmgehause umgeben, um störende Einflüsse der Umgebung zu eliminieren.

Vorteilhafterweise ist das Aufnahmeelement für das Mobiltelefon ein Handy-Universalhalter aus nicht-metallischem Material, insbesondere aus Kunststoff. Dadurch ist der Antennenkoppler für alle auf dem Markt befindlichen Handytypen geeignet und der zu testende Prüfling jeweils exakt positioniert, so daß eine hohe Wiederkehrgenauigkeit bzw. Reproduzierbarkeit der Meßwerte erreicht werden kann. Darauf basierend können handyspezifische Softwarekorrekturverfahren verwendet werden, um die spezifischen HF-Übertragungseigenschaften zu berücksichtigen.

Die Erfindung sowie weitere Ausgestaltungen und Vorteile derselben wird bzw. werden nachfolgend anhand eines Ausführungsbeispiels unter Bezugnahme auf die Zeichnung erläutert. In der Zeichnung zeigt:
- Fig. 1: eine schematische Darstellung einer Leiterplatte des erfindungsgemäßen Antennenkopplers;
- Fig. 2: schematisch die Anordnung eines Mobiltelefonprüflings über der Leiterplatte der Fig. 1;
- Fig. 3: eine Darstellung der Oberseite der Leiterplatte der Fig. 1 in einem um etwa 70% verkleinerten Maßstab;
- Fig. 4: eine Darstellung der Unterseite der Leiterplatte der Fig. 1 in einem um etwa 70% verkleinerten Maßstab;
- Fig. 5: eine teilweise weggebrochene, verkleinerte Draufsicht auf den erfindungsgemäßen Antennenkoppler; und
- Fig. 6: eine verkleinerte Ansicht von unten auf den erfindungsgemäßen Antennenkoppler.

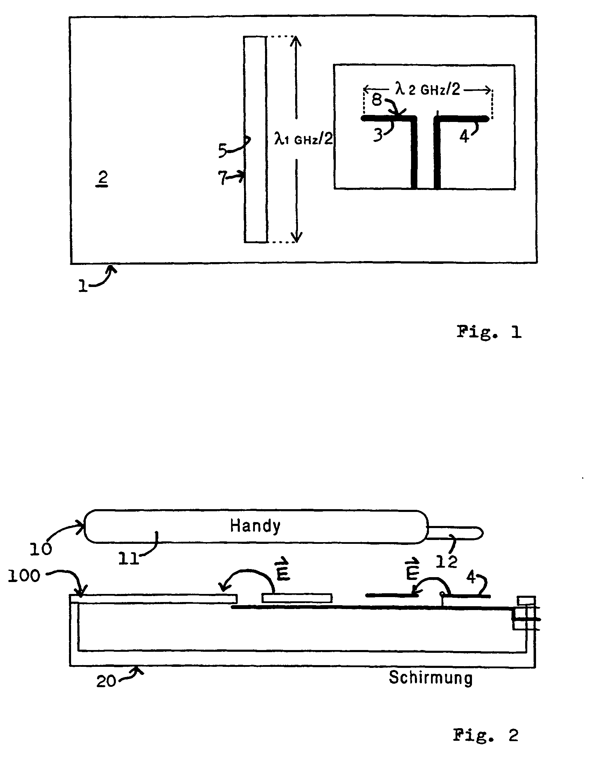

In Fig. 1 ist eine schematische Draufsicht auf eine erfindungsgemäße rechteckige Leiterplatte 1 dargestellt. Die Oberseite der Leiterplatte 1 weist drei bedruckte Abschnitte 2, 3 und 4 auf. Der Abschnitt 2, der flächenmäßig den Hauptteil der Leiterplatte 1 bedeckt, liegt auf Massenpotential und besitzt in seinem Inneren zwei rechteckige Aussparungen 5, 6. Die Ausparung 5 bildet eine Schlitzantenne 7 in Streifenleiter-Technik für einen Frequenzbereich von 880 bis 960 MHz (GSM-System = Global System for Mobile Communications), was dem Frequenzbereich des D1 und D2-Netzes entspricht. Die Schlitzantenne 7 ist in etwa mittig zu der Leiterplatte 1 und parallel zu den Schmalseiten der Leiterplatte 1 angeordnet. Die Abschnitte 3 und 4 sind innerhalb der Aussparung 6 angeordnet. Durch die Abschnitte 3, 4 wird eine Dipolantenne 8 in Streifenleiter-Technik für einen weiteren Frequenzbereich von 1710 bis 1990 MHz (DCS 1800 und DCS 1900-System, was dem E-Netz bzw. dem in USA verwendeten Netz entspricht) parallel zur Längsseite der Leiterplatte 1 gebildet. Aufgrund der Frequenzbereiche ist die Länge der Schlitzantenne 7 etwa doppelt so groß wie die der Dipolantenne 8, vgl. dazu auch die in der Zeichnung angegebene Bemaßung.

In Fig. 2 ist eine schematische Längsschnittansicht der Leiterplatte 1 dargestellt. Ferner entnimmt man der Fig. 2 die Positionierung eines Mobiltelefons 10 in Längsrichtung über bzw. oberhalb bzw. auf der Leiterplatte 1. Das Mobiltelefon 10 weist einen Rumpf 11 und eine Antenne 12 auf. Die Antenne 12 des Mobiltelefons 10 liegt dabei etwa über dem äußeren Abschnitt 4 der Dipolantenne 8. Ein (nicht gezeigter) Kunststoffhalter, der auf bzw. oberhalb der Oberseite der Leiterplatte 1 angebracht ist, nimmt das Mobiltelefon 10 in einer Höhe von etwa 2cm über der Leiterplatte 1 auf. Die genaue Position des Mobiltelefons 10 in x, y und z-Richtung relativ zu der Leiterplatte 1 ist -bei einem vorgegebenen Halter- aufgrund der unterschiedlichen Größen der auf dem Markt befindlichen Handies und der unterschiedlichen Antennenarten (z. B. im Rumpf integrierte Antenne, Helix-Antenne, ausziehbare Antenne ...) nicht fest vorgegeben. Gezeigt ist daher eine "mittlere" Positionierung des Mobiltelefons 10. Es ist ein Vorteil der vorliegenden Erfindung, daß bei den vorgegebenen Antennen-(arten) 7,8 die Positionierung des Mobiltelefons trotz dieser Toleranzen die Koppeldämpfung für alle kommerziell erhältlichen Handies unter 20 dB liegt. Dies konnte nur durch umfangreiche Tests an allen auf dem Markt befindlichen Handies herausgefunden werden. Die spezifischen HF-Eigenschaften zwischen dem Antennenkoppler und einem Prüfling, die bei vorgegebener Positionierung des Handyhalters typenspezifisch sind, werden durch Softwarekorrekturverfahren berücksichtigt. Unterhalb der Leiterplatte 1 ist ein Abschirmgehäuse 20 vorgesehen, das leitend mit dem Abschnitt 2 auf der Oberseite der Leiterplatte 1 verbunden ist. Ferner ist in Fig. 2 schematisch der Verlauf der Feldlinien des E-Feldes der Erreger-Antennnen 7,8 dargestellt. Ein Bezugszeichen 100 weist auf den gesamten Antennenkoppler hin, der überdies auch den nicht gezeigten Handyhalter umfaßt.

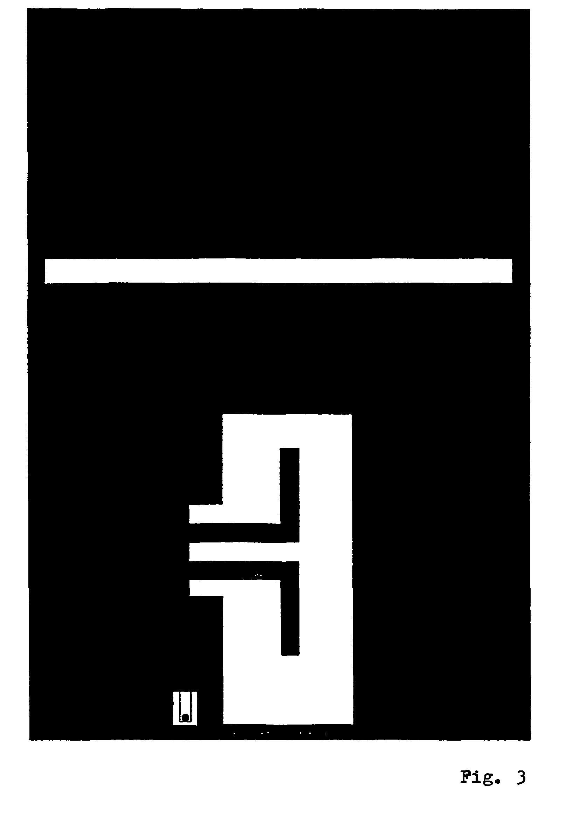

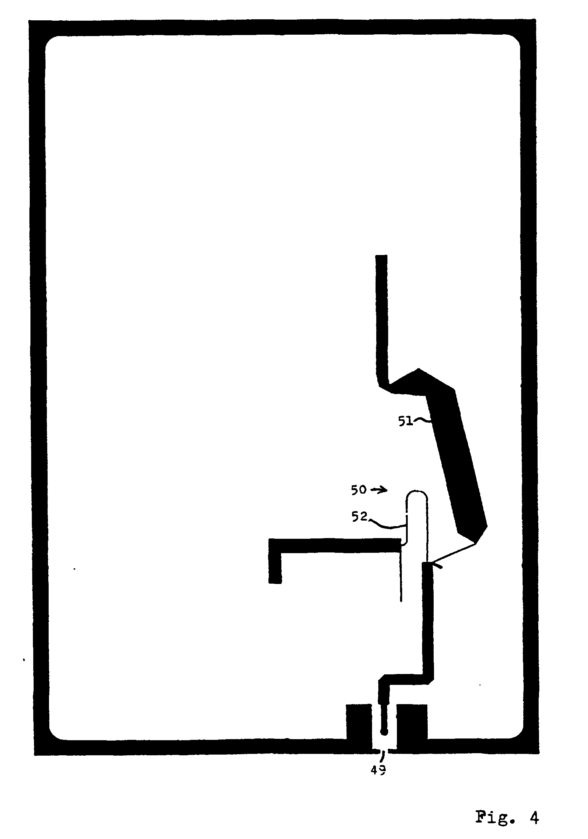

In den Fig. 3 und 4 ist eine originalgetreue Darstellung der Ober- bzw. Unterseite der Leiterplatte 1 in einem um 70% verkleinerten Maßstab gezeigt.

Der Darstellung der Fig. 4 (vgl. auch Fig. 2) entnimmt man, daß auf der Unterseite der Leiterplatte 1 eine Frequenzweichenschaltung in Streifenleiter-Technik aufgeätzt ist, um beide der obengenannten HF-Bereiche an einem einzigen Anschluß 49 zu einer Testvorrichtung zu kombinieren. Dabei ist die Frequenzweiche 50 aus zwei Impedanzwandlern bzw. Transformatoren 51 und 52, die die 50 Ohm-Impedanz des Testgeräts an die jeweilige Impedanz der Antennenelemente 7 bzw. 8 für den zugehörigen Frequenzbereich anpassen, gebildet. Für den jeweils anderen Frequenzbereich stellt der Impedanzwandler eine unendlich hohe Impedanz das, so daß die dargestellte Anordnung als Frequenzweiche wirkt.

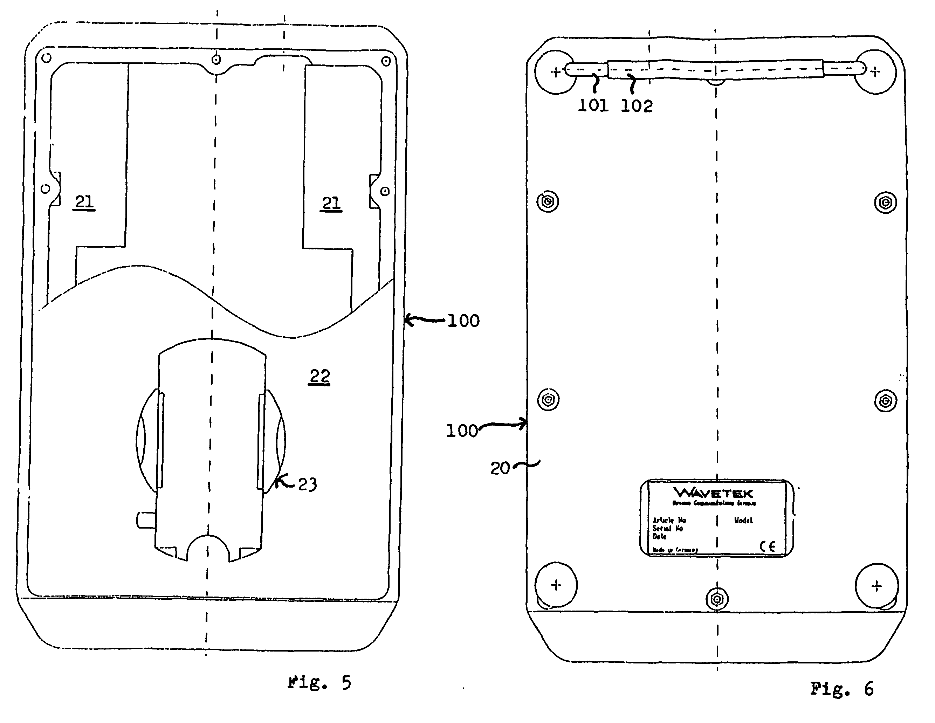

In Fig. 5 ist eine teilweise weggebrochene, verkleinerte Draufsicht auf den erfindungsgemäßen Antennenkoppler gezeigt. Man entnimmt dem oberen weggebrochenen Teil der Fig. 5, daß das Abschirmgehäuse mit einem HF-Dämpfungsmaterial 21 ausgekleidet ist, um störende Reflexionen in dem Gehäuse abzuschwächen. In dem unteren Bereich der Fig. 5 ist eine Draufsicht auf eine Deckplatte 22, die über der (in Fig. 5 nicht gezeigten) Leiterplatte 1 angeordnet ist gezeigt. Auf der Deckplatte 22 ist ein Handy-Universalhalter 23, der das zu testende Mobiltelefon 10 aufnimmt, befestigt.

Fig. 6 zeigt eine verkleinerte Ansicht von unten auf den erfindungsgemäßen Antennenkoppler 100. Um den Antennenkoppler 100 in einer ergonomisch vorteilhaften, variabel schrägen Position auf einer Arbeitsfläche aufzustellen, ist an einem Ende des Gehäuses 20 ein sich über die Querseite erstreckender U-förmiger Drahtbügel 101, der in seinem horizontalen Abschnitt von einem Gummischlauch 102 umgeben ist, vorgesehen. Die Möglichkeit der Schrägstellung des Antennenkopplers 100 und damit des in dem Kunststoffhalter 23 befindlichen Mobiltelefons 10 ist deshalb besonders vorteilhaft, da das Mobiltelefon 10 während des Betriebs des Antennenkopplers 100 -im Gegensatz zum Stand der Technik- zugänglich ist und daher bedient werden kann.

Die Erfindung wurde anhand eines bevorzugten Ausführungsbeispiels erläutert. Die Erfindung ist jedoch nicht auf das dargestellte Ausführungsbeispiel mit zwei Antennenelementen für zwei unterschiedliche Frequenzbereiche beschränkt. Für einen Fachmann ist es im Hinblick auf die vorliegende Offenbarung selbstverständlich, daß die Anzahl der Antennenelemente, deren Ausbildung im Hinblick auf den Frequenzbereich der Antennenelemente, und deren absolute und relative Anordnung auf der Leiterplatte je nach den Anforderungen des Antennenkopplers variiert werden kann, ohne von dem Kern der vorliegenden Erfindung abzuweichen.

## Patentansprüche

1. Antennenkoppler (100) mit einer Leiterplatte (1), auf deren Oberseite wenigstens ein Element in Streifenleiter-Technik ausgebildet ist, **dadurch gekennzeichnet, daß** der Antennenkoppler (100) zum Testen von Mobiltelefonen (10) vorgesehen ist, daß das wenigstens eine Element eine Antenne (7,8) ist, daß der Antennenkoppler (100) ferner ein über der Leiterplatte (1) befestigtes Aufnahmeelement für ein Mobiltelefon (10) aufweist, und daß die Antenne (7,8) eine Schlitzantenne (7) oder eine Dipol-Antenne (8) ist.

2. Antennenkoppler (100) nach Anspruch 1, **dadurch gekennzeichnet, daß** die Zuleitung zu der Antenne (7,8) auf der Unterseite der Leiterplatte (1) ausgebildet ist.

3. Antennenkoppler (100) nach Anspruch 2, **dadurch gekennzeichnet, daß** die Zuleitung einen Impedanzwandler (51, 52) aufweist.

4. Antennenkoppler (100) nach einem der Ansprüche 1 bis 3, **dadurch gekennzeichnet, daß** die Leiterplatte (1) eine erste und eine zweite Antenne (7,8) aufweist, wobei die erste Antenne (7) für einen ersten Frequenzbereich und die zweite Antenne (8) für einen zweiten Frequenzbereich vorgesehen ist.

5. Antennenkoppler (100) nach Anspruch 4, **dadurch gekennzeichnet, daß** der erste Frequenzbereich 880 - 960 MHz und der zweite Frequenzbereich 1710 - 1990 MHz ist.

6. Antennenkoppler (100) nach Anspruch 4 oder 5, **dadurch gekennzeichnet, daß** die erste Antenne (8) eine Dipolantenne und die zweite Antenne (7) eine Schlitzantenne ist.

7. Antennenkoppler (100) nach einem der Ansprüche 4 bis 6, **dadurch gekennzeichnet, daß** die ersten und zweiten Antennen (7,8) im wesentlichen orthogonal zueinander auf der Oberseite der Leiterplatte (1) angeordnet sind.

8. Antennenkoppler (100) nach einem der Ansprüche 4 bis 7, **dadurch gekennzeichnet, daß** die erste Antenne (7) im wesentlichen orthogonal zu der Antenne (12) des Mobiltelefons (10) und im wesentlichen mittig zu dem Rumpf (11) des Mobiltelefons (10) angeordnet ist.

9. Antennenkoppler (100) nach Anspruch 8, **dadurch gekennzeichnet, daß** die zweite Antenne (8) im wesentlichen parallel zu und im wesentlichen unter der Antenne (12) des Mobiltelefons (10) auf der Oberseite der Leiterplatte (1) angeordnet ist.

10. Antennenkoppler (100) nach einem der Ansprüche 4 bis 9, **dadurch gekennzeichnet, daß** die beiden Antennen (7,8) über eine Frequenzweiche (50) an einen einzigen Anschluß (49) zu einer Testvorrichtung kombiniert sind.

11. Antennenkoppler (100) nach Anspruch 10, **dadurch gekennzeichnet, daß** die Frequenzweiche (50) auf der Unterseite der Leiterplatte (1) in Streifenleitertechnik ausgebildet ist.

12. Antennenkoppler (100) nach Anspruch 11, **dadurch gekennzeichnet, daß** die Frequenzweiche (50) einen ersten Impedanzwandler (51) und einen zweiten Impedanzwandler (52) zur Anpassung der Impedanzen der ersten und zweiten Antennen (7,8) an die Impedanz des Anschlusses (49) aufweist.

13. Antennenkoppler (100) nach Anspruch 12, **dadurch gekennzeichnet, daß** der erste Impedanzwandler (51) für den Frequenzbereich der zweiten Antenne (8) eine Impedanz von unendlich besitzt, und der zweite Impedanzwandler (52) für den Frequenzbereich der ersten Antenne (7) eine Impedanz von unendlich besitzt.

14. Antennenkoppler (100) nach einem der vorhergehenden Ansprüche, **dadurch gekennzeichnet, daß** die Oberseite der Leiterplatte (1), insbesondere deren Außenbereich, im wesentlichen aus leitendem Material besteht, das sich auf Massenpotential befindet.

15. Antennenkoppler (100) nach einem der vorhergehenden Ansprüche, **dadurch gekennzeichnet, daß** die Unterseite der Leiterplatte (1) von einem Abschirmgehäuse (20) umgeben ist.

16. Antennenkoppler (100) nach einem der vorhergehenden Ansprüche, **dadurch gekennzeichnet, daß** das Aufnahmeelement für das Mobiltelefon (10) ein Handy-Universalhalter (23) aus einem nicht-metallischen Material, insbesondere Kunststoff, ist.

17. Antennenkoppler (100) nach einem der vorhergehenden Ansprüche, **dadurch gekennzeichnet, daß** die Leiterplatte (1) vorzugsweise aus FR4-Material ist.

18. Antennenkoppler (100) nach einem der vorhergehenden Ansprüche, **dadurch gekennzeichnet, daß** das Aufnahmeelement für das Mobiltelefon (10) auf der Oberseite der Leiterplatte (1) angebracht ist.

## Claims

1. Antenna coupler (100) comprising a printed circuit board (1), upon the upper side of which there is formed by strip transmission line technique at least one element, **characterized in that** the antenna coupler (100) is provided for testing mobile telephones (10), **in that** the at least one element is an antenna (7,8), **in that** the antenna coupler (100) further comprises an accommodating element for a mobile telephone (10), secured above said printed circuit board (1), and **in that** said antenna (7,8) is a slot antenna (7) or a dipole antenna (8).

2. Antenna coupler (100) according to claim 1, **characterized in that** the supply line to the antenna (7,8) is formed on the underside of said printed circuit board (1).

3. Antenna coupler (100) according to claim 2, **characterized in that** said supply line comprises an impedance converter (51,52).

4. Antenna coupler (100) according to any of claims 1 to 3, **characterized in that** said printed circuit board (1) comprises a first and a second antenna (7,8), said first antenna (7) being provided for a first frequency range, and said second antenna (8) for a second frequency range.

5. Antenna coupler (100) according to claim 4, **characterized in that** said first frequency range is 880 - 960 MHz and said second frequency range is 1710 - 1990 MHz.

6. Antenna coupler (100) according to claim 4 or 5, **characterized in that** said first antenna (8) is a dipole antenna, and said second antenna (7) is a slot antenna.

7. Antenna coupler (100) according to any of claims 4 to 6, **characterized in that** said first and second antennas (7,8) are disposed substantially orthogonally to one another on the upper side of said printed circuit board (1).

8. Antenna coupler (100) according to any of claims 4 to 7, **characterized in that** said first antenna (7) is disposed substantially orthogonally to the antenna (12) of the mobile telephone (10), and is disposed substantially centrally to the body (11) of said mobile telephone (10).

9. Antenna coupler (100) according to claim 8, **characterized in that** said second antenna (8) is disposed substantially parallel and substantially underneath said antenna (12) of the mobile telephone (10), on the upper side of said printed circuit board (1).

10. Antenna coupler (100) according to any of claims 4 to 9, **characterized in that** both said antennas (7,8) are combined via a diplexer (50) to a single connection (49) to a test device.

11. Antenna coupler (100) according to claim 10, **characterized in that** said diplexer (50) is formed by a strip transmission line technique on the underside of said printed circuit board (1).

12. Antenna coupler (100) according to claim 11, **characterized in that** said diplexer (50) has a first impedance converter (51), and a second impedance converter (52) for adapting the impedances of said first and second antennas (7, 8) to the impedance of the connection (49).

13. Antenna coupler (100) according to claim 12, **characterized in that** said first impedance converter (51) for the frequency range of said second antenna (8) has an infinite impedance, and wherein said second impedance converter (52) for the frequency range of said first antenna (7) has an infinite impedance.

14. Antenna coupler (100) according to any of the preceding claims, **characterized in that** the upper side of said printed circuit board (1), particularly its outer area, consists substantially of conductive material, which is earthed.

15. Antenna coupler (100) according to any of the preceding claims, **characterized in that** the underside of said printed circuit board (1) is surrounded by a screened housing (20).

16. Antenna coupler (100) according to any of the preceding claims, **characterized in that** said accommodating element for said mobile telephone (10), is a mobile universal holder (23) made of a non-metallic material, in particular, plastic.

17. Antenna coupler (100) according to any of the preceding claims, **characterized in that** said printed circuit board (1) is made of FR4 material.

18. Antenna coupler (100) according to any of the preceding claims, **characterized in that** said accommodating element for said mobile telephone (10) is secured on the upper side of the circuit board (1).

## Revendications

1. Coupleur d'antenne (100) comportant une carte imprimée (1) sur le côté supérieur de laquelle au moins un élément est formé à l'aide de la technique du guide d'ondes à ruban, **caractérisé en ce que** le coupleur d'antenne (100) est destiné à tester des téléphones mobiles (10), **en ce que** le ou les éléments sont constitués par une antenne (7, 8), **en ce que** le coupleur d'antenne (100) comporte par ailleurs un élément de réception, fixé sur la carte imprimée (1), pour un téléphone mobile (10), et **en ce que** l'antenne (7, 8) est constituée par une antenne à fente (7) ou une antenne dipôle (8).

2. Coupleur d'antenne (100) selon la revendication 1, **caractérisé en ce que** le conducteur d'amenée de l'antenne (7, 8) est formé sur le côté inférieur de la carte imprimée (1).

3. Coupleur d'antenne (100) selon la revendication 2, **caractérisé en ce que** le conducteur d'amenée comporte un convertisseur d'impédance (51, 52).

4. Coupleur d'antenne (100) selon l'une des revendications 1 à 3, **caractérisé en ce que** la carte imprimée (1) comporte des première et seconde antennes (7, 8), la première antenne (7) étant prévue pour une première gamme de fréquences et la seconde antenne (8) pour une seconde gamme de fréquences.

5. Coupleur d'antenne (100) selon la revendication 4, **caractérisé en ce que** la première gamme de fréquences est de 880-960 MHz, et la seconde de 1710-1990 MHz.

6. Coupleur d'antenne (100) selon la revendication 4 ou 5, **caractérisé en ce que** la première antenne (8) est constituée par une antenne dipôle, et la seconde antenne (7) par une antenne à fente.

7. Coupleur d'antenne (100) selon l'une des revendications 4 à 6, **caractérisé en ce que** les première et seconde antennes (7, 8) sont disposées sur le côté supérieur de la carte imprimée (1) en étant sensiblement orthogonales l'une par rapport à l'autre.

8. Coupleur d'antenne (100) selon l'une des revendications 4 à 7, **caractérisé en ce que** la première antenne (7) est sensiblement orthogonale par rapport à l'antenne (12) du téléphone mobile (10) et est sensiblement centrée par rapport au corps (11) du téléphone mobile (10).

9. Coupleur d'antenne (100) selon la revendication 8, **caractérisé en ce que** la seconde antenne (8) est disposée sur le côté supérieur de la carte imprimée (1) sensiblement parallèlement à l'antenne (12) du téléphone mobile (10) et sensiblement sous ladite antenne (12).

10. Coupleur d'antenne (10) selon l'une des revendications 4 à 9, **caractérisé en ce que** les deux antennes (7, 8) sont combinées par l'intermédiaire d'un diplexeur (50) au niveau d'une seule connexion (49) avec un dispositif de test.

11. Coupleur d'antenne (100) selon la revendication 10, **caractérisé en ce que** le diplexeur (50) est formé sur le côté inférieur de la carte imprimée (1) à l'aide de la technique du guide d'ondes à rubans.

12. Coupleur d'antenne (100) selon la revendication 11, **caractérisé en ce que** le diplexeur (50) comporte un premier convertisseur d'impédance (51) et un second convertisseur d'impédance (52) pour adapter les impédances des première et seconde antennes (7, 8) à l'impédance de la connexion (49).

13. Coupleur d'antenne (100) selon la revendication 12, **caractérisé en ce que** le premier convertisseur d'impédance (51) pour la gamme de fréquences de la seconde antenne (8) a une impédance infinie, et le second convertisseur d'impédance (52) pour la gamme de fréquences de la première antenne (7) a une impédance infinie.

14. Coupleur d'antenne (100) selon l'une des revendications précédentes, **caractérisé en ce que** le côté supérieur de la carte imprimée (1), en particulier sa zone extérieure, se compose essentiellement d'une matière conductrice qui est au potentiel de masse.

15. Coupleur d'antenne (100) selon l'une des revendications précédentes, **caractérisé en ce que** le côté inférieur de la carte imprimée (1) est entouré par un boîtier de blindage (20).

16. Coupleur d'antenne (100) selon l'une des revendications précédentes, **caractérisé en ce que** l'élément de réception pour le téléphone mobile (10) est constitué par un support universel de téléphone portable (23) en matière non métallique, en particulier en matière plastique.

17. Coupleur d'antenne (100) selon l'une des revendications précédentes, **caractérisé en ce que** la carte imprimée (1) est de préférence en matière FR4.

18. Coupleur d'antenne (100) selon l'une des revendications précédentes, **caractérisé en ce que** l'élément de réception pour le téléphone mobile (10) est placé sur le côté supérieur de la carte imprimée (1).
